Europäisches Patentamt

European Patent Office

Office européen des brevets

(11) Publication number: **0 334 471**
**A2**

## (12) EUROPEAN PATENT APPLICATION

(21) Application number: **89301098.3**

(22) Date of filing: **03.02.89**

(51) Int. Cl.4: **F01N 3/02 , B04C 9/00 , F02M 25/06**

(30) Priority: **25.02.88 GB 8804416**

(43) Date of publication of application:
**27.09.89 Bulletin 89/39**

(84) Designated Contracting States:
**BE CH DE ES FR GB IT LI NL SE**

(71) Applicant: **FORD MOTOR COMPANY LIMITED**
**Eagle Way**
**Brentwood Essex CM13 3BW(GB)**

(84) **BE CH GB IT LI NL SE**

Applicant: **FORD-WERKE**
**AKTIENGESELLSCHAFT**
**Werk Köln-Niehl Henry-Ford-Strasse**
**Postfach 60 40 02**
**D-5000 Köln 60(DE)**

(84) **DE**

Applicant: **FORD FRANCE SOCIETE ANONYME**
**344 Avenue Napoléon Bonaparte B.P. 307**
**F-92506 Rueil Malmaison Cedex(FR)**

(84) **FR**

Applicant: **FORD MOTOR COMPANY**
**County of Wayne**
**Dearborn, MI 48120(US)**

(84) **ES**

(72) Inventor: **Davies, Cedric Paul**
**14 Prince of Wales Drive**
**Great Totham Maldon Essex(GB)**

(74) Representative: **Messulam, Alec Moses et al**
**A. Messulam & Co. 24 Broadway**
**Leigh on Sea Essex SS9 1BN(GB)**

(54) Controlling exhaust gas emissions.

(57) An exhaust gas separator is described for inclusion in the exhaust gas path from an internal combustion engine to separate solid particles from the gas.

The separator comprises a generally elongate pipe (14), means (16) for causing the exhaust gases flowing along the pipe (14) to perform a helical swirling motion about an axis parallel to the longitudinal extent of the pipe (14), a radially enlarged cylindrical collection chamber (22) immediately downstream of the swirl producing means (16), an exit pipe (24) downstream of the chamber, the diameter of the exit pipe (24) being smaller than that of the chamber (22), and a tangential offtake from the collection chamber (22) by which trapped particles
can be removed from the chamber (22).

Fig.1.

## CONTROLLING EXHAUST GAS EMISSIONS

This invention relates to the controlling of exhaust gas emissions from an internal combustion engine, and in particular to a separator for inclusion in the exhaust gas path leading from an internal combustion engine to separate out particulate components from the exhaust gasses. The invention also relates to an exhaust gas recirculation system incorporating such a separator.

The cleaning of exhaust gas emissions from motor vehicles is a major concern. One aspect of emissions technology relates to gaseous emissions which are usually classified either as NOx, as CO or as hydrocarbons. Another aspect of emission technology relates to non gaseous components in the exhaust gas stream, and such components are referred to as particulates. The present invention is concerned predominantly with the reduction of particulates in an exhaust gas stream.

According to the invention, there is provided an exhaust gas separator for inclusion in the exhaust gas path from an internal combustion engine to separate solid particles from the gas, the separator comprising a generally elongate pipe, means for causing the exhaust gases flowing along the pipe to perform a helical swirling motion about an axis parallel to the longitudinal extent of the pipe, a radially enlarged cylindrical collection chamber immediately downstream of the swirl producing means, an exit pipe downstream of the chamber, the diameter of the exit pipe being smaller than that of the chamber, and a tangential offtake from the collection chamber by which trapped particulates can be removed from the chamber.

The swirl producing means may be formed by two parallel pipe sections arranged so that the exhaust gas flows out of one pipe section and tangentially into the other pipe section to produce swirl.

In this way, the exhaust gases can be "centrifuged" with the result that the non-gaseous particulates are flung to the outside of the swirling gaseous mass. Because of the sudden increase in diameter in the chamber, the speed at which the outermost gases are travelling suddenly drops and the particulates pass into the outer part of the radially enlarged chamber where they will remain when the exhaust gases enter the exit pipe.

The radially enlarged chamber can have a co-axial louvered ring in its centre to prevent particulates re-entering the exhaust stream. This louvered ring may have the same diameter as the entry and exit pipes to the enlarged chamber.

In another aspect of the invention, the exhaust gas separator described above forms part of an exhaust gas recirculation system, and the EGR supply duct is connected to the tangential offtake from the collection chamber. The suction applied by the EGR system will enhance the rotary swirling motion of the exhaust gases in the chamber. Furthermore, the particulates collected by the chamber are recycled through the EGR system to the engine and have a second chance of being burnt during the combustion cycle.

The invention will now be further described, by way of example, with reference to the accompanying drawings in which:

Figure 1 is a sectional view through an exhaust gas separator in accordance with the invention;

Figure 2 is a cross section through the separator of Figure 1 on the lines II-II;

Figure 3 is a cross section through the separator of Figure 1 on the line III-III; and

Figure 4 is a schematic illustration of a separator in accordance with the invention incorporated in an engine installation.

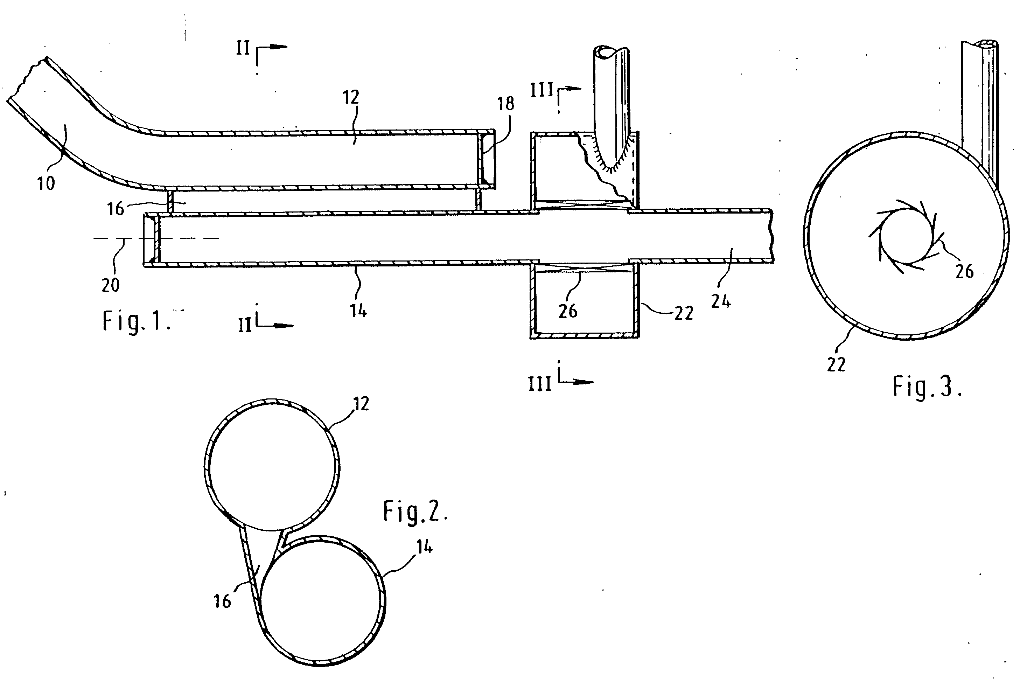

Figure 1 shows an exhaust pipe 10 leading from an exhaust manifold connected to an engine cylinder head. The pipe 10 ends in a straight pipe section 12, and a swirl pipe section 14 is placed parallel to the section 12.

Figure 2 shows the relative positions of the pipe sections 12 and 14, and also shows a passage 16 connecting the two sections and which enters the section 14 tangentially.

The end of the pipe section 12 at 18 is closed off, so exhaust gas flowing through the pipe 10 into the section 12 then must pass through the passage 16 into the swirl pipe section 14. In doing so the gas will be forced to follow a helical, swirling path about the axis 20 of the pipe section 14. The result of this swirling motion will be that the particulates will be flung to the outside of the swirling gaseous mass. The passage 16 between the pipe sections 12 and 14 extends practically the whole length of the overlap between these two pipes, so as to ensure that all the gas passing from one pipe section to the other is properly set in a swirling motion.

Downstream of the slot 16, the pipe 14 enters a chamber 22 which has a substantially larger diameter than the pipe 14. The effect of the swirling gas stream entering this chamber is that the outermost layers of the gas stream are separated from the rest of the gas stream.

The exhaust gas stream, now without its particulates, then passes into an exit pipe 24 and to conventional exhaust pipe components downstream.

Figure 3 shows a section through the chamber 22, showing louvered slats 26 arranged around a diameter which corresponds to the internal diameter of the pipes 14 and 24. The direction in which these slats 26 are set is such as not to impede the swirling motion of the gas. However the presence of the slats should prevent any particulates re-entering the gas stream if exhaust gas flow drops to a very low level or ceases.

A trap door or a vent may be provided in the cylindrical wall of the chamber 22 to allow the separated particulates to be emptied. However in a preferred embodiment, the outer layers of gas which contain the particulates are recirculated to the engine to provide the exhaust gas recirculation (EGR) feed. In this way, the particulate trap 22 will be self-emptying.

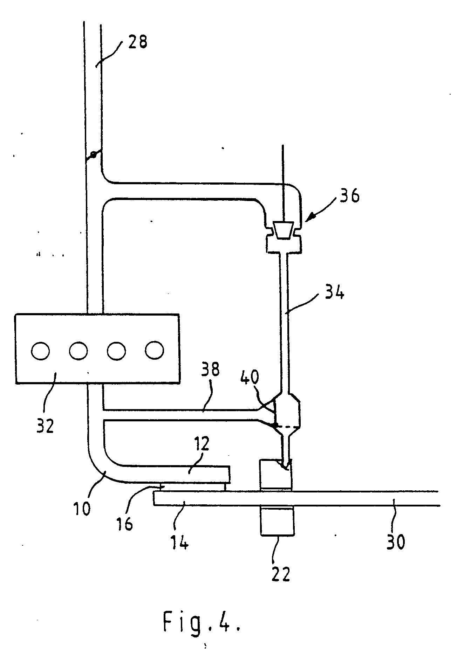

Figure 4 illustrates an engine installation, for a diesel engine, with an air intake pipe 28 and an exhaust pipe 30. The engine block is shown at 32, and an exhaust gas recirculation passage 34 is controlled by a poppet valve 36.

The exhaust gas will normally be drawn from the particulate trap 22 and will result in the separated particulates being drawn in to the EGR flow and being recycled through the combustion process. However there may be occasions when the engine is on full load, and no EGR is supplied, when the quantity of particulates in the trap 22 will build up to a high level and it would be undesirable to release this concentration of particulates into the engine at one go. In order to avoid this problem, a secondary exhaust gas feed pipe 38 is provided, and this pipe is connected directly to the exhaust gas manifold upstream of the separator. A simple valve, illustrated here as a flap 40, can decide which source of exhaust gas will be recirculated to the engine. In Figure 4 the flap 40 is shown (in full lines) closing the auxiliary pipe 38, and (in dotted lines) in its alternative position closing the exhaust gas feed from the separating chamber 22. The flap 40 may however be positioned intermediate these two end positions to give a mixture of exhaust gas feeds.

The exhaust gas separator described here is particularly suitable for use in diesel engines where particulates (in particular soot particles) are a special problem. It would be equally possible to install the equipment described in a petrol engine, although the justification for its use may not be so appropriate in that case as in the case of a diesel engine.

The axial length of the passage 16 may, for example, amount to 300mm. If the diameter of the pipes 14, 24 is about 55mm, then the diameter of the chamber 22 may be about 200mm.

## Claims

1. An exhaust gas separator for inclusion in the exhaust gas path from an internal combustion engine to separate solid particles from the gas, the separator comprising a generally elongate pipe (14), means (16) for causing the exhaust gases flowing along the pipe (14) to perform a helical swirling motion about an axis parallel to the longitudinal extent of the pipe (14), a radially enlarged cylindrical collection chamber (22) immediately downstream of the swirl producing means (16), an exit pipe (24) downstream of the chamber, the diameter of the exit pipe (24) being smaller than that of the chamber (22), and a tangential offtake from the collection chamber (22) by which trapped particles can be removed from the chamber (22).

2. An exhaust gas separator as claimed in Claim 1, wherein the swirl producing means is formed by two parallel pipe sections (12,14) arranged so that the exhaust gas flows out of one pipe section (12) and tangentially into the other pipe section (14) to produce swirl.

3. An exhaust gas separator as claimed in Claim 1 or Claim 2, wherein the radially enlarged chamber (22) has a co-axial louvered ring in its centre to prevent particulates re-entering the exhaust stream.

4. An exhaust gas separator as claimed in Claim 3, wherein the louvered ring has the same diameter as the entry and exit pipes (14,24) to the enlarged chamber (22).

5. An exhaust gas recirculation system comprising an engine with an intake duct, an exhaust duct, an exhaust gas recirculation duct connecting the intake and exhaust ducts and an exhaust gas separator as claimed in any preceding claim, wherein the EGR duct is connected to the tangential offtake from the collection chamber (22).

6. An EGR system as claimed in Claim 5, wherein the EGR duct is a branched duct having two EGR supply branches, one being connected into the tangential offtake from the collection chamber of the separator and the other (38) being connected into the engine exhaust duct (10) at a location between the engine itself and the separator (22).

7. An exhaust gas recirculation system as claimed in Claim 5 or Claim 6, wherein the engine is a diesel engine.

II →

III →

12

18

III →

II ↓ →

10

16

20

26

14

II ↓

22

24

III ↓ →

Fig.1.

12

16

14

Fig.2.

26

22

Fig.3.

EP 0 334 471 A2

Fig.4.